# FASCICULE DE BREVET EUROPEEN

(11) **EP 2 585 238 B1**
(45) Date de publication et mention de la délivrance du brevet: **09.04.2014**
(21) Numéro de dépôt: 11738985.8
(22) Date de dépôt: 22.06.2011
(51) Int. Cl.: B21J 5/00, B21K 25/00

(54) **PROCEDE D'ASSEMBLAGE DE PIECE**
VERFAHREN ZUM FÜGEN VON TEILEN
METHOD OF JOINING PARTS

(30) Priorité: 22.06.2010 CH 10192010
(43) Date de publication de la demande: 01.05.2013
(73) Titulaire: The Swatch Group Research and Development Ltd., 2074 Marin (CH)
(72) Inventeur: WINKLER, Yves, CH-3185 Schmitten (CH); BOURBAN, Stewes, CH-1588 Cudrefin (CH); DUBACH, Alban, CH-2502 Bienne (CH)
(74) Mandataire: Giraud, Eric
(86) Numéro de dépôt international: PCT/EP2011/060514
(87) Numéro de publication internationale: WO 2011/161195

(56) Documents cités:
- EP-A1- 2 138 323
- EP-A1- 2 192 454
- US-A- 5 896 642

## Description

La présente invention concerne un procédé d'assemblage permanent entre au moins une première pièce formée d'un premier matériau d'une part, et d'au moins une seconde pièce formée d'un second matériau d'autre part et destinée à emprisonner ladite première pièce dans ledit assemblage permanent (voir le document US-A-5 896 642 qui divulgue un procédé selon le préambule des revendications 1 et 2).

Le domaine technique de l'invention est le domaine de la mécanique fine. Plus précisément, l'invention appartiendra au domaine technique des méthodes de fabrication des pièces en métal amorphe.

### ARRIERE PLAN TECHNOLOGIQUE

La présente invention concerne l'assemblage de deux pièces entres elles, afin d'avoir les deux pièces assemblées par serrage ou au contraire d'avoir les deux pièces mobiles l'une par rapport à l'autre.

Or, pour réaliser un assemblage mobile (par exemple un palier rotatif), il est connu d'avoir plusieurs étapes de fabrication consistant tout d'abord à usiner de façon très précise au minimum trois pièces à montées mobiles. Ensuite au minimum deux de ces pièces doivent être assemblées par vissage, collage, soudageou autre, afin d'emprisonner en partie la troisième qui devra rester mobile. La réalisation de cet assemblage mobile nécessite que le jeu final entre les deux pièces soit suffisant pour leur permettre d'être mobile l'une par rapport à l'autre. Ce jeu ne doit pas être trop important au risque d'avoir un déplacement d'une pièce par rapport à l'autre qui ne soit pas optimal. La réalisation d'un tel assemblage est donc complexe et coûteuse.

Pour la réalisation d'assemblages immobiles/étanches, il est possible de réaliser un filetage pour l'assemblage ou de coller, braser, souder ou riveter les pièces entre elles.

Or, certains problèmes peuvent apparaître. En effet, quelquefois les moyens connus cités précédemment ne peuvent pas être utilisés. Premièrement, ces méthodes ne peuvent pas être utilisées car ils ne sont pas possibles. Par exemple, il n'est pas possible de réaliser un taraudage dans un matériau fragile sous peine de casser la pièce.

Deuxièmement, ces méthodes ne peuvent pas être utilisées car des effets non désirés sont présents, par exemple, le dégazage de la colle.

### RESUME DE L'INVENTION

L'invention concerne un procédé de fixation de deux pièces entre elles qui pallie les inconvénients de l'art antérieur en permettant la fixation d'une première pièce à une seconde pièce de façon simple et efficace, ledit assemblage pouvant être fixe ou mobile.

A cet effet, l'invention concerne le procédé d'assemblage cité ci-dessus qui se caractérise en ce qu'il comprend les étapes suivantes :
- choisir ledit premier matériau comme étant un alliage métallique apte à devenir au moins partiellement amorphe, le second matériau n'étant pas un alliage métallique apte à devenir au moins partiellement amorphe;
- se munir de la pièce composée dudit second matériau;
- mettre en forme la première pièce et l'assembler simultanément à la seconde pièce, ledit premier matériau ayant subit au plus tard au moment de ladite mise en forme un traitement lui permettant de devenir au moins partiellement amorphe, la première pièce et la seconde pièce subissant un cycle thermique consistant en un gradient de montée en température pour assurer au moins une dilatation de la seconde pièce suivi d'un gradient de refroidissement permettant le restreint de la seconde pièce autour de la première pièce pour emprisonner celle-ci,

- dimensionner ladite au moins une seconde pièce et ladite au moins une première pièce, et choisir le coefficient de dilatation thermique dudit second matériau par rapport au coefficient de dilatation thermique dudit premier matériau, pour, selon le cas :
- si le produit dudit coefficient de dilatation thermique dudit second matériau par ledit gradient de refroidissement est plus élevé que le produit dudit coefficient de dilatation thermique dudit premier matériau par ledit gradient de refroidissement, obtenir un assemblage permanent avec serrage de ladite seconde pièce sur ladite première pièce ;
- si le produit dudit coefficient de dilatation thermique dudit second matériau par ledit gradient de refroidissement est inférieur au produit dudit coefficient de dilatation thermique dudit premier matériau par ledit gradient de refroidissement, obtenir un assemblage permanent avec au moins un degré de liberté entre ladite seconde pièce et ladite première pièce.

Un avantage de la présente invention est de permettre une grande facilité dans la fixation des deux pièces. En effet, en jouant sur la différence de coefficient de dilatation des matériaux, il n'est pas utile de prévoir des moyens de serrage ou des moyens permettant d'avoir un jeu. Le jeu entre les deux pièces ou le serrage est réalisé directement par le choix des matériaux et de leur coefficient de dilatation. De même, il devient aisé de moduler le serrage ou le jeu en choisissant précisément les matériaux utilisés.

Des modes de réalisation avantageux de ce procédé de dépôt d'un revêtement font l'objet des revendications dépendantes.

Dans un premier mode de réalisation avantageux, le procédé comprend l'étape suivante :
- définir ledit cycle thermique de sorte que ledit gradient de montée en température élève le premier matériau choisi comme étant un alliage métallique apte à devenir au moins partiellement amorphe au-dessus de sa température de fusion lui permettant de perdre au moins localement toute structure cristalline, et de sorte que ledit gradient de refroidissement amène le premier matériau au-dessous de sa température de transition vitreuse lui permettant de devenir au moins partiellement amorphe.

Dans un second mode de réalisation avantageux, le procédé comprend les étapes suivantes :
- transformer le premier matériau sous forme d'une préforme et lui faire subir un traitement lui permettant de devenir au moins partiellement amorphe;
- définir ledit cycle thermique dudit premier matériau transformé en préforme de sorte que celui-ci soit soumis à une température comprise entre sa température de transition vitreuse et sa température de cristallisation ;
- presser ladite préforme de sorte que ladite au moins une seconde pièce emprisonne ladite au moins une première pièce.
- refroidir l'ensemble permettant audit premier matériau de garder une nature au moins partiellement amorphe.

Dans un troisième mode de réalisation avantageux, le procédé comprend une étape consistant à déposer une couche intermédiaire sur la seconde pièce, et une étape finale consistant à dissoudre cette couche intermédiaire afin d'augmenter le jeu entre la première et la seconde pièce dans le cas où le produit dudit coefficient de dilatation thermique dudit second matériau par ledit gradient de refroidissement est inférieur au produit dudit coefficient de dilatation thermique dudit premier matériau par ledit gradient de refroidissement.

Dans un autre mode de réalisation avantageux, le procédé comprend une étape consistant à réaliser au moins un relief sur la seconde pièce afin d'augmenter l'accrochage mécanique entre la première et la seconde pièce.

Dans un autre mode de réalisation avantageux, ledit au moins un relief est réalisé par usinage.

Dans un autre mode de réalisation avantageux, ledit premier matériau ou second matériau choisi comme étant un alliage métallique apte à devenir au moins partiellement amorphe subit un traitement lui permettant de devenir totalement amorphe.

Un avantage de la présente invention est de permettre une grande facilité de réalisation. En effet, le procédé utilise les métaux amorphes qui ont la caractéristique particulière de se ramollir tout en restant amorphe durant un certain temps dans un intervalle de température [Tg - Tx] donné propre à chaque alliage (avec Tx : température de cristallisation et Tg : température de transition vitreuse) (par exemple pour un alliage Zr_{41.24}Ti_{13.75}Cu_{12.5}Ni₁₀Be_{22.5} : Tg = 350°C, Tx = 460°C). Il est ainsi possible de les mettre en forme sous une contrainte relativement faible et à une température peu élevée permettant alors l'utilisation d'un procédé simplifié. L'utilisation d'un tel matériau permet en outre de reproduire très précisément des géométries fines car la viscosité de l'alliage diminue fortement en fonction de la température dans l'intervalle de température [Tg - Tx] et l'alliage épouse ainsi tous les détails du négatif. Par exemple, pour un matériau à base de platine, la mise en forme se fait aux alentours de 300°C pour une viscosité atteignant 10³ Pa.s pour une contrainte de 1 MPa, au lieu d'une viscosité de 10¹² Pa.s à la température Tg. Cela permet de procéder simultanément à la réalisation des pièces et à leur assemblage.

L'invention concerne également un procédé d'assemblage permanent entre au moins une première pièce formée d'un premier matériau d'une part, et d'au moins une seconde pièce formée d'un second matériau d'autre part et destinée à emprisonner ladite première pièce dans ledit assemblage permanent, caractérisé en ce qu'il comprend les étapes suivantes :
- choisir ledit second matériau comme étant un alliage métallique apte à devenir au moins partiellement amorphe, le premier matériau n'étant pas un alliage métallique apte à devenir au moins partiellement amorphe;
- se munir de la pièce composé dudit premier matériau;
- mettre en forme la seconde pièce et l'assembler simultanément à la première pièce, ledit second matériau ayant subit au plus tard au moment de ladite mise en forme un traitement lui permettant de devenir au moins partiellement amorphe, la seconde pièce et la première pièce subissant un cycle thermique consistant en un gradient de montée en température pour assurer une dilatation permettant l'assemblage de la première pièce et de la seconde pièce suivi d'un gradient de refroidissement permettant le restreint de la seconde pièce autour de la première pièce pour emprisonner celle-ci,
- dimensionner ladite au moins une seconde pièce et ladite au moins une première pièce, et choisir le coefficient de dilatation thermique dudit second matériau par rapport au coefficient de dilatation thermique dudit premier matériau, pour, selon le cas :
- si le produit dudit coefficient de dilatation thermique dudit second matériau par ledit gradient de refroidissement est plus élevé que le produit dudit coefficient de dilatation thermique dudit premier matériau par ledit gradient de refroidissement, obtenir un assemblage permanent avec serrage de ladite seconde pièce sur ladite première pièce ;
- si le produit dudit coefficient de dilatation thermique dudit second matériau par ledit gradient de refroidissement est inférieur au produit dudit coefficient de dilatation thermique dudit premier matériau par ledit gradient de refroidissement, obtenir un assemblage permanent avec au moins un degré de liberté entre ladite seconde pièce et ladite première pièce.

### BREVE DESCRIPTION DES FIGURES

Les buts, avantages et caractéristiques du procédé d'assemblage selon la présente invention apparaîtront plus clairement dans la description détaillée suivante d'au moins une forme de réalisation de l'invention donnée uniquement à titre d'exemple non limitatif et illustrée par les dessins annexés sur lesquels :
- les figures 1 à 6 représentent de manière schématique un premier mode de réalisation du procédé selon la présente invention;
- les figures 7 à 11 représentent de manière schématique un second mode de réalisation du procédé selon la présente invention;
- les figures 12 à 18 représentent de manière schématique une variante du premier mode de réalisation du procédé selon la présente invention;
- la figure 19 représente de manière schématique une variante du second mode de réalisation du procédé selon la présente invention;

### DESCRIPTION DETAILLEE

La présente invention concerne un assemblage d'une première pièce 1 et d'une seconde pièce 2. La première pièce 1 est réalisée en un premier matériau ayant un coefficient de dilatation thermique α₁ et la seconde pièce 2 est réalisée en un second matériau ayant un coefficient de dilatation thermique α₂. La seconde pièce 2 est agencée pour emprisonner la première pièce 1.

Dans le cas présent, la première pièce 1 est réalisée dans un matériau au moins partiellement amorphe comprenant au moins un élément métallique comme un alliage métallique au moins partiellement amorphe. Néanmoins, il est envisageable que la seconde pièce 2 soit réalisée en un matériau au moins partiellement amorphe comprenant au moins un élément métallique et que la première pièce 1 soit réalisée dans un matériau quelconque. De préférence, les première 1 ou seconde 2 pièces sont réalisées en un alliage métallique totalement amorphe pouvant être identique ou différent. Ledit élément métallique pourra être du type précieux.

Pour assembler la seconde pièce 2 et la première pièce 1, les caractéristiques du métal amorphe de la pièce mobile 1 sont utilisées. En effet, le métal amorphe permet une grande facilité dans la mise en forme permettant l'élaboration simple de pièces aux formes compliquées avec une plus grande précision. Cela est dû aux caractéristiques particulières du métal amorphe qui peut se ramollir tout en restant amorphe durant un certain temps dans un intervalle de température [Tg - Tx] donné propre à chaque alliage (par exemple pour un alliage Zr_{41.24}Ti_{13.75}Cu_{12.5}Ni₁₀Be_{22.5}, Tg=350°C et Tx=460°C). Il est ainsi possible de les mettre en forme sous une contrainte relativement faible et à une température peu élevée permettant alors l'utilisation d'un procédé simplifié tel que le formage à chaud. L'utilisation d'un tel matériau permet en outre de reproduire très précisément des géométries fines car la viscosité de l'alliage diminue fortement en fonction de la température dans l'intervalle de température [Tg - Tx] et l'alliage épouse ainsi tous les détails du négatif. Par exemple, pour un matériau à base de platine, la mise en forme se fait aux alentours de 300°C pour une viscosité atteignant 10³ Pa.s pour une contrainte de 1 MPa, au lieu d'une viscosité de 10¹² Pa.s à la température Tg.

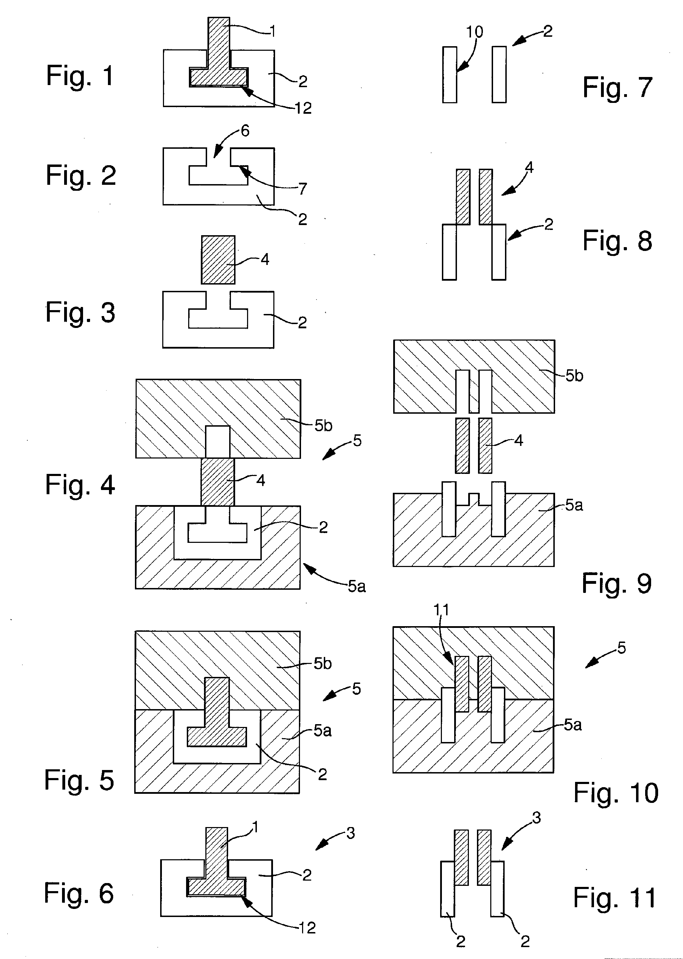

La première étape, représentée à la figure 2, consiste à se munir de la seconde pièce 2 servant de support. Ce support 2 est constitué d'un matériau appelé second matériau pouvant être quelconque. Cette seconde pièce 2 emprisonne la première pièce 1.

La seconde étape, représentée à la figure 3, consiste à se munir du premier matériau, c'est-à-dire du matériau constitutif de la première pièce 1.

La troisième étape, représentée aux figures 4 à 6, consiste à mettre en forme le premier matériau, ici du métal amorphe, de sorte à réaliser la première pièce 1 et que cette première pièce 1 soit assemblée à la seconde pièce 2. Pour cela, le procédé de formage à chaud est utilisé.

En tout premier lieu, une préforme 4 en matériau amorphe est réalisée. Cette préforme 4 consiste en une pièce d'aspect et de dimensions similaires à la pièce finale. Typiquement, si l'on veut réaliser, par exemple, une membrane circulaire, la préforme 4 se présentera sous la forme d'un disque. Un point important est que ladite préforme 4 ait déjà une structure amorphe. Pour cela, le ou les matériaux constituant le premier matériau sont mis sous forme liquide par élévation de la température au dessus de leur température de fusion. Ils sont ensuite mélangés de façon homogène de' sorte à former ledit premier matériau. Ce mélange est ensuite coulé dans les matrices 5a, 5b d'un moule 5 de forme désirée. Le tout est refroidi aussi vite que possible de sorte que les atomes n'aient pas le temps de se structurer, le premier matériau devenant alors au moins partiellement amorphe

La préforme 4 est ensuite disposée sur la seconde pièce 2 de sorte à la recouvrir comme représenté sur la figure 4. La presse à chaud est alors mise en température jusqu'à atteindre une température spécifique au matériau, préférentiellement, entre sa température de transition vitreuse Tg et sa température de cristallisation Tx. La première 1 et la seconde 2 pièce subissent alors une montée de température identique. Il est envisageable que cette montée en température soit différente pour la seconde 2 et pour la première 1 pièce.

Une fois la presse à chaud en température, une pression est alors exercée sur la préforme 4 afin de remplir le logement 6 de la seconde pièce comme représenté à la figure 5. Cette opération de pressage est effectuée pendant un laps de temps prédéfini.

Une fois le temps de pressage écoulé, il est prévu de refroidir le premier matériau en-dessous de Tg afin de former la première pièce 1. Le pressage et le refroidissement doit être suffisamment rapide pour éviter la cristallisation du premier matériau. En effet, pour un premier matériau donné et à une température donnée entre sa température de transition vitreuse Tg et sa température de cristallisation Tx, il existe une durée limite au-delà de laquelle, ledit matériau cristallise. Cette durée diminue lorsque la température approche sa température de cristallisation Tx et cette durée augmente lorsque la température approche sa température de transition vitreuse Tg. Ainsi, le matériau amorphe va cristalliser si le temps passé à une température comprise entre Tg et Tx excède une certaine valeur spécifique pour chaque couple température/alliage. Typiquement pour l'alliage Zr41.2Ti13.8Cu12.5Ni10Be22.5 et pour une température de 440°C, le temps de pressage ne devra pas dépasser 120 secondes environ. Ainsi, le formage à chaud permet de conserver l'état au moins partiellement amorphe initial de la préforme 4.

Les premières 1 et secondes 2 pièces sont ensuite retirées du moule 5 comme visible à la figure 6 afin de donner la pièce finale.

On rappellera que la seconde pièce peut être réalisée en métal amorphe et que la première pièce 1 peut être réalisée dans un matériau quelconque.

Une variante du formage à chaud, utilise le principe de la coulée. Les composants du métal amorphe sont mélangés sous forme liquide c'est-à-dire avec une température au moins égale à la température de fusion. Le tout est ensuite coulé dans un moule ayant l'empreinte de la pièce à réaliser puis refroidit rapidement de sorte que les atomes ne puissent pas se structurer.

Avantageusement selon l'invention, les premiers et seconds matériaux sont choisis de sorte que le coefficient de dilatation thermique α₁ soit différent du coefficient de dilatation thermique α₂. Le coefficient de dilatation thermique d'un matériau détermine la dilatation que ce matériau va subir lorsqu'il est monté en température selon la formule suivante Δ*L*= α·*L*₀·Δ*T* Avec :
- Δ*L*, la variation de longueur en mètre (m) ;
- α, le coefficient de dilatation linéaire en kelvin puissance moins un (K⁻¹) ;
- L₀, la longueur initiale en mètre (m) ;
- ΔT=T-T₀, la variation de température en kelvin (K) ou en degré Celsius (°C).

Cela signifie par exemple, que pour une barre d'acier de 30m, l'acier ayant un coefficient de dilatation thermique de 12,0×10⁻⁶ subissant un ΔT positif de 60°C, la barre va se dilater pour atteindre une longueur de 30.0216m. Dés lors, lorsque la température va descendre, la barre va se contracter et reprendre sa longueur initiale.

Dans le cas de la présente invention, on utilise ce principe. En effet, le formage à chaud est réalisé sous température supérieure à la température ambiante signifiant que les matériaux constituants les premières 1 et secondes 2 pièces sont dilatés puisqu'ils subissent un gradient de montée en température. Lors du refroidissement c'est-à-dire lors d'un gradient de refroidissement, les premiers et seconds matériaux vont se contracter. Dans le cas du formage à chaud, le gradient est identique puisque la première et la seconde pièce sont toutes les deux placés entre les mêmes matrices 5a et 5b. Si les coefficients de dilatation thermique sont différents, les contractions seront différentes. Bien entendu, si la première 1 et la seconde 2 pièce n'ont pas subit la même montée de température, le gradient sera différent pour les deux pièces et le degré de contraction sera également différent puisque la contraction dépend du gradient de montée en température, du coefficient de dilatation thermique et des dimensions.

Dans le cas de la coulée, le fait de verser ledit alliage en fusion dans le moule provoque la montée en température de la seconde pièce 2 se trouvant dans ledit moule 5. On peut alors considérer que les deux matériaux vont avoir une température s'approchant l'une de l'autre par transfert thermique.

Dans un premier mode de réalisation, les premières 1 et secondes pièces 2 sont assemblées de façon mobile de sorte à former un ensemble 3. Par exemple, on pourra imaginer que cet ensemble 3 est une rotule ou une roue montée libre en rotation sur un axe. On peut également imaginer deux tubes montés libres l'un par rapport à l'autre. Cet ensemble comprend un support 2 qui est la seconde pièce auquel est fixée une pièce mobile 1 qui est la première pièce comme visible à la figure 1.

Avantageusement selon l'invention, les coefficients de dilatation thermique α₁ et α₂ des premières 1 et secondes 2 pièces sont différents. Ce qui provoque la mobilité de la première pièce 1 par rapport à la seconde pièce 2, c'est la différence entre les coefficients de dilation provoquant l'apparition d'un jeu ou d'un serrage. L'utilisation d'un matériau au moins partiellement amorphe comprenant au moins un élément métallique permet astucieusement de réaliser simultanément l'opération de fabrication de la pièce réalisée en matériau au moins partiellement amorphe comprenant au moins un élément métallique avec l'opération d'assemblage de cette pièce avec une autre pièce.

Le jeu entre les deux pièces mobiles est défini par la différence des coefficients de dilatation thermique des premier et second matériaux, par la température à laquelle le formage à chaud est réalisé et par les dimensions de la première pièce 1 et de la seconde pièce 2. Pour le cas d'un assemblage mobile c'est à dire avec la présence d'un jeu 12 entre les deux pièces 1, 2, le coefficient de dilatation thermique α₁ est plus élevé que le coefficient de dilatation thermique α₂. Plus le coefficient de dilatation thermiqueα₁ sera grand par rapport au coefficient de dilatation thermique α₂ et plus le jeu 12 sera grand. En effet, comme la première pièce 1 est emprisonnée dans la seconde pièce 2, il faut que cette première pièce 1 se contracte de façon plus importante que la seconde pièce 2. Pour cela, le produit dudit coefficient de dilatation thermique α₂ par ledit gradient de refroidissement doit être inférieur au produit dudit coefficient de dilatation thermique α₁ par ledit gradient de refroidissement.

De même, plus la température de formage à chaud sera élevée et plus le jeu à température ambiante sera grand. Il est également possible de modifier le jeu 12 finale de l'assemblage en appliquant une contrainte plus ou moins élevée lors de son refroidissement et ceci au moins jusqu'à Tg.

L'utilisation du métal amorphe permet alors de réaliser l'opération de fabrication de la première pièce 1 en même temps que l'assemblage de façon mobile sans complexifié le procédé mais au contraire en le simplifiant.

Il peut être prévu d'enlever le surplus de matière par exemple par un procédé mécanique ou chimique. Ce surplus peut être enlevé avant ou après le refroidissement.

Dans une alternative, la seconde pièce 2 sera en métal ou alliage métallique amorphe alors que la première pièce 1 sera en un matériau quelconque. La seconde pièce 2 qui est le support comprend un logement 6 dans lequel la première pièce 1 vient se loger. Le procédé utilisé est le formage à chaud décrit auparavant.

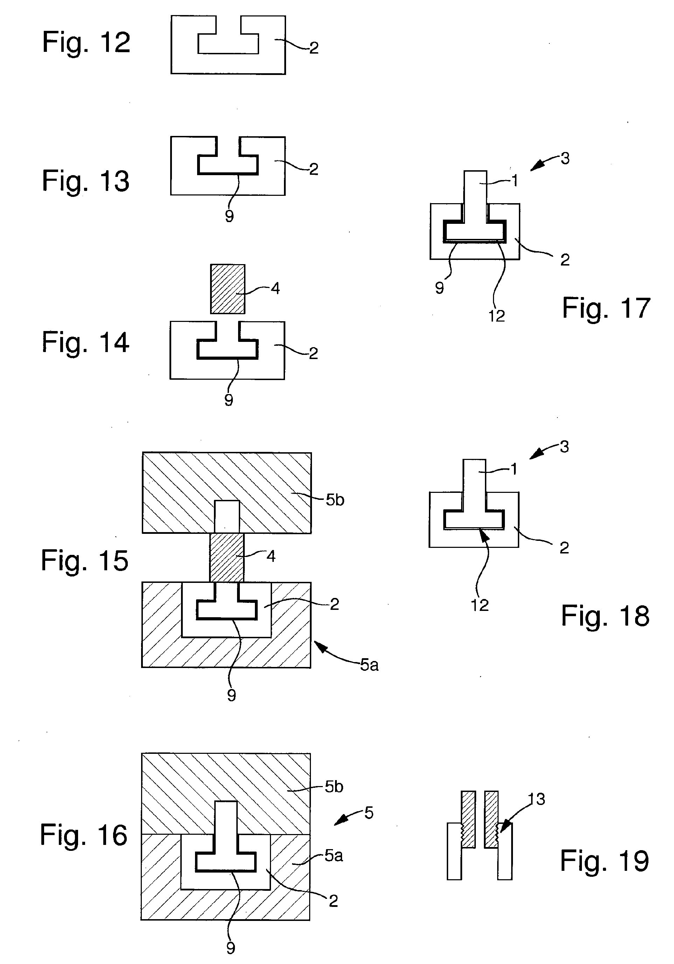

Dans une première variante visible aux figures 12 à 18, il peut être prévu une étape supplémentaire entre la première et la seconde étape. Cette étape supplémentaire consiste à déposer une couche intermédiaire 9 sur la pièce qui n'est pas en métal amorphe c'est-à-dire ici sur les parois 7 du logement 6 de la seconde pièce 2 lorsque la première pièce est surmoulée dans ce logement 6 ou sur les parois 7 de la première pièce 1 dans le cas de l'alternative audit premier mode de réalisation. Cette couche intermédiaire 9 peut être déposée par CVD, PVD, électro-déposition, dépôt galvanique, ou autres. Après la troisième étape, cette couche 9 se trouve donc insérée entre la première pièce 1 et la seconde pièce 2. Cette couche intermédiaire 9 peut alors être dissoute sélectivement dans un bain chimique afin d'agrandir le jeu 12 entre lesdites premières 1 et secondes pièces 2. La dissolution est possible car un jeu 12 préalable se crée entre la première 1 et seconde pièce 2, permettant à la solution chimique de s'infiltrer et donc d'éliminer l'intégralité de cette couche intermédiaire 9.

Dans un second mode de réalisation, les première 1 et seconde 2 pièces sont assemblées de façon fixe de sorte à former un ensemble. La capacité du métal amorphe à épouser parfaitement tous les détails d'une surface lors de son formage à chaud permet également de rendre un assemblage étanche en choisissant correctement la différence des coefficients de dilatation des matériaux utilisés pour les pièces 1 et 2. Par exemple, on pourra imaginer que cet ensemble 3 est un assemblage de deux tubes montés étanches ou d'une aiguille de montre montée fixe sur son axe. Cet ensemble comprend un support 2 qui est la seconde pièce 2 auquel est fixée une pièce mobile 1 qui est la première pièce comme visible à la figure 7. Le procédé utilisé est le même que le procédé utilisé lors du premier mode de réalisation et qui est représenté aux figures 8 à 11. Ce procédé utilise le formage à chaud et comme pour le premier mode de réalisation, la première pièce 1 ou la seconde pièce 2 peuvent être en métal amorphe ou alliage métallique amorphe.

Dans ce mode de réalisation, l'assemblage étanche ou le serrage d'une seconde pièce emprisonnant une première pièce est réalisé en choisissant les premier et second matériaux de sorte que le coefficient de dilatation thermique α₁ soit plus faible que le coefficient de dilatation thermique α₂. Plus particulièrement, les dimensions des première et seconde pièces et les coefficients de dilatation thermique α₁ et α₂ sont déterminés pour que le produit dudit coefficient de dilatation thermique α₂ par ledit gradient de refroidissement est plus élevé que le produit dudit coefficient de dilatation thermique α₁ par ledit gradient de refroidissement. La seconde pièce qui emprisonne la première pièce se contracte donc de façon plus importante que la première pièce entraînant le serrage de cette dernière.

En conséquence, lors du refroidissement des première et seconde pièces, les premier et second matériaux se contractent. Comme les coefficients de dilatation thermique sont différents, les contractions sont différentes. Dans le présent cas, le second matériau va se contracter plus que le premier matériau opérant ainsi un serrage de la seconde pièce 2 sur la première 1. La force de serrage est donc définie par la différence des coefficients de dilatation thermique des premier et second matériaux ainsi que par la température à laquelle le formage à chaud est réalisé et les dimensions des pièces. Plus le coefficient de dilatation thermiqueα₂ sera grand par rapport au coefficient de dilatation thermiqueα₁ et plus la force de serrage sera importante. De même, plus la température de formage à chaud sera élevée et plus la force de serrage à température ambiante sera grande. Il est également possible de modifier la force de serrage finale de l'assemblage en appliquant une contrainte plus ou moins élevée lors de son refroidissement et ceci au moins jusqu'à Tg.

Dans une variante à ce second mode de réalisation visible à la figure 19, il peut être prévu une étape supplémentaire entre la première et la seconde étape. Cette étape supplémentaire consiste à usiner les parois intérieures 10 de la seconde pièce 2 lorsque la première pièce est en matériau amorphe ou à usiner les parois extérieures 11 de la première pièce 1 lorsque la seconde pièce est en matériau amorphe. Cet usinage consiste à usiner des rugosités comme des reliefs 13. Ceci permet, lors du formage à chauds, d'améliorer l'accrochage mécanique et/ou l'étanchéité entre la première 1 et seconde pièce 2.

Il faut également rajouter une variante où l'on ajoute une couche intermédiaire entre la pièce 1 et la pièce 2. Cette couche permet alors d'ajuster les contraintes de serrage dans une gamme plus grande en choisissant, pour cette couche, un matériau ayant un coefficient de dilatation différent des pièces 1 et 2.

Dans une variante, il est également possible d'utiliser cette couche comme une sécurité pour ne pas casser la pièce à assembler au métal amorphe, notamment dans le cas de l'assemblage d'un matériau fragile comme le silicium par exemple. On peut alors déposer, sur le matériau fragile, une couche molle (cuivre, or, argent, indium, etc), qui lors de la mise sous contrainte de l'assemblage due au refroidissement, se déformera plastiquement avant que le matériau fragile ne casse.

Dans une autre variante, il peut être prévu de chauffer localement la première 1 ou la seconde pièce 2 de sorte à dilater localement le matériau de la première 1 ou la seconde 2 pièce. Cela permet ainsi d'assembler la première et la seconde pièce ensemble. De préférence, cette variante sera utilisée dans le cadre du second mode de réalisation.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Procédé d'assemblage permanent entre au moins une première pièce (1) formée d'un premier matériau d'une part, et d'au moins une seconde pièce (2) formée d'un second matériau d'autre part et destinée à emprisonner ladite première pièce dans ledit assemblage permanent, comprenant les étapes suivantes :
- choisir ledit premier matériau comme étant un alliage métallique apte à devenir au moins partiellement amorphe, le second matériau n'étant pas un alliage métallique apte à devenir au moins partiellement amorphe;
- se munir de la pièce composé dudit second matériau;
- mettre en forme la première pièce (1) et l'assembler simultanément à la seconde pièce, ledit premier matériau ayant subit au plus tard au moment de ladite mise en forme un traitement lui permettant de devenir au moins partiellement amorphe, la première pièce et la seconde pièce subissant un cycle thermique consistant en un gradient de montée en température pour assurer au moins une dilatation de la seconde pièce suivi d'un gradient de refroidissement permettant le restreint de la seconde pièce (2) autour de la première pièce pour emprisonner celle-ci, **caractérisé en ce qu'**il comprend en outre les étapes suivantes :
- dimensionner ladite au moins une seconde pièce et ladite au moins une première pièce, et choisir le coefficient de dilatation thermique (α2) dudit second matériau par rapport au coefficient de dilatation thermique (α1) dudit premier matériau, pour, selon le cas :
- si le produit dudit coefficient de dilatation thermique (α2) dudit second matériau par ledit gradient de refroidissement est plus élevé que le produit dudit coefficient de dilatation thermique (α1) dudit premier matériau par ledit gradient de refroidissement, obtenir un assemblage permanent avec serrage de ladite seconde pièce sur ladite première pièce ;
- si le produit dudit coefficient de dilatation thermique dudit second matériau par ledit gradient de refroidissement est inférieur au produit dudit coefficient de dilatation thermique dudit premier matériau par ledit gradient de refroidissement, obtenir un assemblage permanent avec au moins un degré de liberté entre ladite seconde pièce et ladite première pièce.

2. Procédé d'assemblage permanent entre au moins une première (1) pièce formée d'un premier matériau d'une part, et d'au moins une seconde pièce (2) formée d'un second matériau d'autre part et destinée à emprisonner ladite première pièce dans ledit assemblage permanent, **caractérisé en ce qu'**il comprend les étapes suivantes :
- choisir ledit second matériau comme étant un alliage métallique apte à devenir au moins partiellement amorphe, le premier matériau n'étant pas un alliage métallique apte à devenir au moins partiellement amorphe;
- se munir de la pièce composé dudit premier matériau;
- mettre en forme la seconde pièce et l'assembler simultanément à la première pièce, ledit second matériau ayant subit au plus tard au moment de ladite mise en forme un traitement lui permettant de devenir au moins partiellement amorphe, la seconde pièce et la première pièce subissant un cycle thermique consistant en un gradient de montée en température pour assurer au moins une dilatation de la première pièce suivi d'un gradient de refroidissement permettant le restreint de la seconde pièce autour de la première pièce pour emprisonner celle-ci,
- dimensionner ladite au moins une seconde pièce et ladite au moins une première pièce, et choisir le coefficient de dilatation thermique dudit second matériau (α2) par rapport au coefficient de dilatation thermique dudit premier matériau (α), pour, selon le cas :
- si le produit dudit coefficient de dilatation thermique dudit second matériau par ledit gradient de refroidissement est plus élevé que le produit dudit coefficient de dilatation thermique dudit premier matériau par ledit gradient de refroidissement, obtenir un assemblage permanent avec serrage de ladite seconde pièce sur ladite première pièce ;
- si le produit dudit coefficient de dilatation thermique dudit second matériau par ledit gradient de refroidissement est inférieur au produit dudit coefficient de dilatation thermique dudit premier matériau par ledit gradient de refroidissement, obtenir un assemblage permanent avec au moins un degré de liberté entre ladite seconde pièce et ladite première pièce.

3. Procédé d'assemblage permanent selon la revendication 1, **caractérisé en ce qu'**il comprend l'étape suivante :
- définir ledit cycle thermique de sorte que ledit gradient de montée en température élève le premier matériau choisi comme étant un alliage métallique apte à devenir au moins partiellement amorphe au-dessus de sa température de fusion lui permettant de perdre au moins localement toute structure cristalline, et de sorte que ledit gradient de refroidissement amène le premier matériau au-dessous de sa température de transition vitreuse lui permettant de devenir au moins partiellement amorphe.

4. Procédé d'assemblage permanent selon la revendication 2, **caractérisé en ce qu'**il comprend l'étape suivante :
- définir ledit cycle thermique de sorte que ledit gradient de montée en température élève le second matériau choisi comme étant un alliage métallique apte à devenir au moins partiellement amorphe au-dessus de sa température de fusion lui permettant de perdre au moins localement toute structure cristalline, et de sorte que ledit gradient de refroidissement amène le second matériau au-dessous de sa température de transition vitreuse lui permettant de devenir au moins partiellement amorphe.

5. Procédé d'assemblage permanent selon la revendication 1, **caractérisé en ce que** l'étape de mise en forme comprend les étapes suivantes :
- transformer le premier matériau sous forme d'une préforme (4) et lui faire subir un traitement lui permettant de devenir au moins partiellement amorphe;
- définir ledit cycle thermique dudit premier matériau transformé en préforme de sorte que celui-ci soit soumis à une température comprise entre sa température de transition vitreuse et sa température de cristallisation ;
- presser ladite préforme de sorte que ladite au moins une seconde pièce (2) emprisonne ladite au moins une première pièce (1);
- refroidir l'ensemble permettant audit premier matériau de garder une nature au moins partiellement amorphe.

6. Procédé d'assemblage permanent selon la revendication 2, **caractérisé en ce que** l'étape de mise en forme comprend les étapes suivantes :
- transformer le second matériau sous forme d'une préforme (4) et lui faire subir un traitement lui permettant de devenir au moins partiellement amorphe ;
- définir ledit cycle thermique dudit second matériau (2) transformé en préforme de sorte que celui-ci soit soumis à une température comprise entre sa température de transition vitreuse et sa température de cristallisation ;
- presser ladite préforme de sorte que ladite au moins une seconde pièce emprisonne ladite au moins une première pièce (1) ;
- refroidir l'ensemble permettant audit second matériau de garder une nature au moins partiellement amorphe.

7. Procédé d'assemblage selon les revendication 1 ou 3 ou 5, **caractérisé en ce qu'**il comprend une étape consistant à déposer une couche intermédiaire (9) sur la seconde pièce, et une étape finale consistant à dissoudre cette couche intermédiaire afin d'augmenter le jeu (12) entre la première (1) et la seconde pièce (2) dans le cas où le produit dudit coefficient de dilatation thermique dudit second matériau par ledit gradient de refroidissement est inférieur au produit dudit coefficient de dilatation thermique dudit premier matériau par ledit gradient de refroidissement.

8. Procédé d'assemblage selon les revendications 2 ou 4 ou 6, **caractérisé en ce qu'**il comprend une étape consistant à déposer une couche intermédiaire (9) sur la première pièce (1), et une étape finale consistant à dissoudre cette couche intermédiaire afin d'augmenter le jeu (12) entre la première et la seconde pièce dans le cas où le produit dudit coefficient de dilatation thermique dudit second matériau par ledit gradient de refroidissement est inférieur au produit dudit coefficient de dilatation thermique dudit premier matériau par ledit gradient de refroidissement.

9. Procédé d'assemblage selon la revendication 5, **caractérisé en ce qu'**il comprend une étape consistant à réaliser au moins un relief (13) sur la seconde pièce afin d'augmenter l'accrochage mécanique entre la première (1) et la seconde pièce (2).

10. Procédé d'assemblage selon la revendication 6, **caractérisé en ce qu'**il comprend une étape consistant à réaliser au moins un relief sur la première pièce afin d'augmenter l'accrochage mécanique entre la première et la seconde pièce.

11. Procédé d'assemblage selon les revendications 9 ou 10, **caractérisé en ce que** ledit au moins un relief est réalisé par usinage.

12. Procédé d'assemblage selon l'une des revendications précédentes, **caractérisé en ce que** ledit premier matériau ou second matériau choisi comme étant un alliage métallique apte à devenir au moins partiellement amorphe subit un traitement lui permettant de devenir totalement amorphe.

13. Procédé d'assemblage selon l'une des revendications précédentes, **caractérisé en ce que** ledit premier matériau ou second matériau choisi comme étant un alliage métallique apte à devenir au moins partiellement amorphe subit, après l'étape d'assemblage, un traitement thermique lui permettant de devenir au moins partiellement cristallin.

## Patentansprüche

1. Verfahren für die dauerhafte Zusammenfügung einerseits wenigstens eines ersten Teils (1), das aus einem ersten Material gebildet ist, und andererseits wenigstens eines zweiten Teils (2), das aus einem zweiten Material gebildet ist und dazu bestimmt ist, das erste Teil in der dauerhaften Zusammenfügung zu umschließen, das die folgenden Schritte umfasst:
- Wählen des ersten Materials als eine Metalllegierung, die wenigstens teilweise amorph werden kann, wobei das zweite Material keine Metalllegierung ist, die wenigstens teilweise amorph werden kann;
- Bereitstellen des aus dem zweiten Material gebildeten Teils;
- Formen des ersten Teils (1) und gleichzeitig Zusammenfügen des ersten Teils (1) mit dem zweiten Teil, wobei das erste Material spätestens zum Zeitpunkt des Formens einer Verarbeitung unterworfen wird, die ihm ermöglicht, wenigstens teilweise amorph zu werden, wobei das erste Teil und das zweite Teil einem thermischen Zyklus unterworfen werden, der aus einem Temperaturanstiegsgradienten, um wenigstens eine Ausdehnung des zweiten Teils sicherzustellen, gefolgt von einem Abkühlungsgradienten, der das Umspannen des ersten Teils durch das zweite Teil (2), um das Erstere zu umschließen, ermöglicht, besteht, **dadurch gekennzeichnet, dass** es außerdem die folgenden Schritte umfasst:
- Dimensionieren des wenigstens einen zweiten Teils und des wenigstens einen ersten Teils und Wählen des Wärmeausdehnungskoeffizienten (α2) des zweiten Materials in Bezug auf den Wärmeausdehnungskoeffizienten (α1) des ersten Materials, um gegebenenfalls:
- dann, wenn das Produkt aus dem Wärmeausdehnungskoeffizienten (α2) des zweiten Materials mit dem Abkühlungsgradienten größer ist als das Produkt des Wärmeausdehnungskoeffizienten (α1) des ersten Materials mit dem Abkühlungsgradienten, eine dauerhafte Zusammenfügung mit Festklemmen des zweiten Teils an dem ersten Teil zu erhalten;
- dann, wenn das Produkt des Wärmeausdehnungskoeffizienten des zweiten Materials mit dem Abkühlungsgradienten kleiner ist als das Produkt des Wärmeausdehnungskoeffizienten des ersten Materials mit dem Abkühlungsgradienten, eine dauerhafte Zusammenfügung mit wenigstens einem Freiheitsgrad zwischen dem zweiten Teil und dem ersten Teil zu erhalten.

2. Verfahren zum dauerhaften Zusammenfügen einerseits eines ersten Teils (1), das aus einem ersten Material gebildet ist, und andererseits wenigstens eines zweiten Teils (2), das aus einem zweiten Material gebildet ist und dazu bestimmt ist, das erste Teil in der dauerhaften Zusammenfügung zu umschließen, **dadurch gekennzeichnet, dass** es die folgenden Schritte umfasst:
- Wählen des zweiten Materials als eine Metalllegierung, die wenigstens teilweise amorph werden kann, wobei das erste Material keine Metalllegierung ist, die wenigstens teilweise amorph werden kann;
- Bereitstellen des aus dem ersten Material zusammengesetzten Teils;
- Formen des zweiten Teils und gleichzeitig Zusammenfügen des zweiten Teils mit dem ersten Teil, wobei das zweite Material spätestens zum Zeitpunkt des Formens einer Verarbeitung unterworfen wird, die ihm ermöglicht, wenigstens teilweise amorph zu werden, wobei das zweite Teil und das erste Teil einem thermischen Zyklus unterworfen werden, der aus einem Temperaturanstiegsgradienten, um wenigstens eine Ausdehnung des ersten Teils sicherzustellen, gefolgt von einem Abkühlungsgradienten, der das Umspannen des ersten Teils durch das zweite Teil, um das Erstere zu umschließen, ermöglicht, besteht,
- Dimensionieren des wenigstens einen zweiten Teils und des wenigstens einen ersten Teils und Wählen des Wärmeausdehnungskoeffizienten (α2) des zweiten Materials in Bezug auf den Wärmeausdehnungskoeffizienten (α1) des ersten Materials, um gegebenenfalls:
- dann, wenn das Produkt des Wärmeausdehnungskoeffizienten des zweiten Materials mit dem Abkühlungsgradienten größer ist als das Produkt des Wärmeausdehnungskoeffizienten des ersten Materials mit dem Abkühlungsgradienten, eine dauerhafte Zusammenfügung mit Festklemmen des zweiten Teils am ersten Teil zu erhalten;
- dann, wenn das Produkt des Wärmeausdehnungskoeffizienten des zweiten Materials mit dem Abkühlungsgradienten kleiner ist als das Produkt des Wärmeausdehnungskoeffizienten des ersten Materials mit dem Abkühlungsgradienten, eine dauerhafte Zusammenfügung mit wenigstens einem Freiheitsgrad zwischen dem zweiten Teil und dem ersten Teil zu erhalten.

3. Verfahren zum dauerhaften Zusammenfügen nach Anspruch 1, **dadurch gekennzeichnet, dass** es den folgenden Schritt umfasst:
- Definieren des thermischen Zyklus derart, dass der Temperaturanstiegsgradient das erste Material, das als eine Metalllegierung gewählt ist, die wenigstens teilweise amorph werden kann, über seine Schmelztemperatur erhöht, was ihm ermöglicht, wenigstens lokal jegliche kristalline Struktur zu verlieren, und derart, dass der Abkühlungsgradient das erste Material unter seine Glasübergangstemperatur bringt, was ihm ermöglicht, wenigstens teilweise amorph zu werden.

4. Verfahren zum dauerhaften Zusammenfügen nach Anspruch 2, **dadurch gekennzeichnet, dass** es den folgenden Schritt umfasst:
- Definieren des thermischen Zyklus derart, dass der Temperaturanstiegsgradient das zweite Material, das als eine Metalllegierung gewählt ist, die wenigstens teilweise amorph werden kann, über seine Schmelztemperatur bringt, was ihm ermöglicht, wenigstens lokal jegliche kristalline Struktur zu verlieren, und derart, dass der Abkühlungsgradient das zweite Material unter seine Glasübergangstemperatur bringt, was ihm ermöglicht, wenigstens teilweise amorph zu werden.

5. Verfahren zum dauerhaften Zusammenfügen nach Anspruch 1, **dadurch gekennzeichnet, dass** der Formungsschritt die folgenden Schritte umfasst:
- Transformieren des ersten Materials in Form eines Vorformlings (4) und Beaufschlagen des ersten Materials mit einer Behandlung, die ihm ermöglicht, wenigstens teilweise amorph zu werden;
- Definieren des thermischen Zyklus des zu einem Vorformling transformierten ersten Materials in der Weise, dass es einer Temperatur unterworfen wird, die zwischen seiner Glasübergangstemperatur und seiner Kristallisationstemperatur liegt;
- Pressen des Vorformlings in der Weise, dass wenigstens ein zweites Teil (2) das wenigstens eine erste Teil (1) umschließt;
- Abkühlen der Gesamtheit, was dem ersten Material ermöglicht, eine wenigstens teilweise amorphe Natur beizubehalten.

6. Verfahren zum dauerhaften Zusammenfügen nach Anspruch 2, **dadurch gekennzeichnet, dass** der Formungsschritt die folgenden Schritte umfasst.
- Transformieren des zweiten Materials in Form eines Vorformlings (4) und Beaufschlagen des zweiten Materials mit einer Behandlung, die ihm ermöglicht, wenigstens teilweise amorph zu werden;
- Definieren des thermischen Zyklus des zu einem Vorformling transformierten zweiten Materials (2) in der Weise, dass es einer Temperatur unterworfen wird, die zwischen seiner Glasübergangstemperatur und seiner Kristallisationstemperatur liegt;
- Pressen des Vorformlings in der Weise, dass wenigstens ein zweites Teil das wenigstens eine erste Teil (1) umschließt;
- Abkühlen der Gesamtheit, was dem zweiten Material ermöglicht, eine wenigstens teilweise amorphe Natur beizubehalten.

7. Zusammenfügungsverfahren nach den Ansprüchen 1 oder 3 oder 5, **dadurch gekennzeichnet, dass** es einen Schritt umfasst, der darin besteht, auf dem zweiten Teil eine Zwischenschicht (9) abzulagern, und einen abschließenden Schritt umfasst, der darin besteht, diese Zwischenschicht aufzulösen, um das Spiel (12) zwischen dem ersten Teil (1) und dem zweiten Teil (2) in dem Fall zu vergrößern, in dem das Produkt des Wärmeausdehnungskoeffizienten des zweiten Materials mit dem Abkühlungsgradienten kleiner ist als das Produkt des Wärmeausdehnungskoeffizienten des ersten Materials mit dem Abkühlungsgradienten.

8. Zusammenfügungsverfahren nach den Ansprüchen 2 oder 4 oder 6, **dadurch gekennzeichnet, dass** es einen Schritt umfasst, der darin besteht, eine Zwischenschicht (9) auf dem ersten Teil (1) abzulagern, und einen abschließenden Schritt umfasst, der darin besteht, diese Zwischenschicht aufzulösen, um das Spiel (12) zwischen dem ersten und dem zweiten Teil in dem Fall zu erhöhen, in dem das Produkt des Wärmeausdehnungskoeffizienten des zweiten Materials mit dem Abkühlungsgradienten kleiner ist als das Produkt des Wärmeausdehnungskoeffizienten des ersten Materials mit dem Abkühlungsgradienten.

9. Zusammenfügungsverfahren nach Anspruch 5, **dadurch gekennzeichnet, dass** es einen Schritt umfasst, der darin besteht, wenigstens ein Relief (13) auf dem zweiten Teil zu verwirklichen, um die mechanische Verankerung zwischen dem ersten Teil (1) und dem zweiten Teil (2) zu verbessern.

10. Zusammenfügungsverfahren nach Anspruch 6, **dadurch gekennzeichnet, dass** es einen Schritt umfasst, der darin besteht, wenigstens ein Relief auf dem ersten Teil zu verwirklichen, um die mechanische Verankerung zwischen dem ersten Teil und dem zweiten Teil zu verbessern.

11. Zusammenfügungsverfahren nach den Ansprüchen 9 oder 10, **dadurch gekennzeichnet, dass** das wenigstens eine Relief durch Spanen verwirklicht wird.

12. Zusammenfügungsverfahren nach einem der vorhergehenden Ansprüche, **dadurch gekennzeichnet, dass** das erste Material oder das zweite Material, das als eine Metalllegierung gewählt wird, die wenigstens teilweise amorph werden kann, einer Verarbeitung unterworfen wird, die ihm ermöglicht, vollständig amorph zu werden.

13. Zusammenfügungsverfahren nach einem der vorhergehenden Ansprüche, **dadurch gekennzeichnet, dass** das erste Material oder das zweite Material, das als eine Metalllegierung gewählt wird, die ihm ermöglicht, wenigstens teilweise amorph zu werden, nach dem Zusammenfügungsschritt einer Wärmebehandlung unterworfen wird, die ihm ermöglicht, wenigstens teilweise kristallin zu werden.

## Claims

1. Method of permanent assembly between at least a first part (1), formed of a first material on the one hand, and at least a second part (2), which is formed of a second material on the other hand, and which is intended to confine said first part in said permanent assembly, including the following steps:
- selecting as the first material a metal alloy capable of becoming at least partially amorphous, the second material not being a metal alloy capable of becoming at least partially amorphous;
- taking the part formed of said second material;
- shaping the first part (1) and simultaneously assembling said first part to the second part, with said first material having undergone, at the latest at the moment of said shaping, a treatment allowing said material to become at least partially amorphous, the first part and the second part undergoing a thermal cycle consisting in an increase in temperature gradient to ensure at least the expansion of the second part followed by a cooling gradient for shrinking the second part around the first part so as to confine said first part,
**characterized in that** it further comprises the following steps:
- sizing said at least one second part and said at least one first part, and choosing the thermal expansion coefficient (α2) of said second material compared to the thermal expansion coefficient (α1) of said first material, in order, as appropriate:
- obtaining a permanent assembly with said second part clamped over said first part if the product of said thermal expansion coefficient (α2) of said second material and said cooling gradient is higher than the product of said thermal expansion coefficient (α1) of said first material and said cooling gradient;
- obtaining a permanent assembly with at least a degree of freedom between said second part and said first part if the product of said thermal expansion coefficient of said second material and said cooling gradient is lower than the product of said thermal expansion coefficient of said first material and said cooling gradient.

2. Method of permanent assembly between at least a first part (1), formed of a first material on the one hand, and at least a second part (2), which is formed of a second material on the other hand, and which is intended to confine said first part in said permanent assembly, **characterized in that** it includes the following steps:
- selecting as said second material a metal alloy capable of becoming at least partially amorphous, the first material not being a metal alloy capable of becoming at least partially amorphous;
c) taking the part formed of said first material;
- shaping the second part and simultaneously assembling said second part to the first part, with said second material having undergone, at the latest at the moment of said shaping, a treatment allowing said second material to become at least partially amorphous, the second part and the first part undergoing a thermal cycle consisting in an increase in temperature gradient to ensure at least the expansion of the first part followed by a cooling gradient for shrinking the second part around the first part so as to confine said first part,
- sizing said at least one second part and said at least one first part, and choosing the thermal expansion coefficient (α2) of said second material compared to the thermal expansion coefficient (α) of said first material, in order, as appropriate:
- obtaining a permanent assembly with said second part clamped over said first part if the product of said thermal expansion coefficient of said second material and said cooling gradient is higher than the product of said thermal expansion coefficient of said first material and said cooling gradient;
- obtaining a permanent assembly with at least a degree of freedom between said second part and said first part if the product of said thermal expansion coefficient of said second material and said cooling gradient is lower than the product of said thermal expansion coefficient of said first material and said cooling gradient.

3. Permanent assembly method according to claim 1, **characterized in that** it includes the following step:
- defining said thermal cycle such that said increase in temperature gradient raises the first material, selected to be a metal alloy capable of becoming at least partially amorphous, above the melting temperature causing said material to lose, at least locally, any crystalline structure, and such that said cooling gradient brings the first material below the vitreous transition temperature thereof, allowing said first material to become at least partially amorphous.

4. Permanent assembly method according to claim 2, **characterized in that** it includes the following step:
- defining said thermal cycle such that said increase in temperature gradient raises the second material, selected to be a metal alloy capable of becoming at least partially amorphous, above the melting temperature causing said material to lose, at least locally, any crystalline structure, and such that said cooling gradient brings the second material below the vitreous transition temperature thereof, allowing said second material to become at least partially amorphous.

5. Permanent assembly method according to claim 1, **characterized in that** the shaping step includes the following steps:
- transforming the first material into a preform (4) and subjecting said material to a treatment which allows said material to become at least partially amorphous;
- defining said thermal cycle of said first material transformed into a preform such that the preform is subject to a temperature comprised between the vitreous transition temperature and the crystallisation temperature thereof;
- pressing said preform such that said at least one second part (2) confines said at least one first part (1);
- cooling the assembly to allow said first material to keep an at least partially amorphous nature.

6. Permanent assembly method according to claim 2, **characterized in that** the shaping step includes the following steps:
- transforming the second material into a preform (4) and subjecting said material to a treatment which allows said material to become at least partially amorphous;
- defining said thermal cycle of said second material (2) transformed into a preform such that the preform is subject to a temperature comprised between the vitreous transition temperature and the crystallisation temperature thereof;
- pressing said preform such that said at least one second part confines said at least one first part (1);
- cooling the assembly to allow said second material to keep an at least partially amorphous nature.

7. Assembly method according to claims 1 or 3 or 5, **characterized in that** the method includes a step consisting in depositing an intermediate layer (9) on the second part, and a final step consisting in dissolving said intermediate layer in order to increase the play (12) between the first (1) and second (2) part if the product of said thermal expansion coefficient of said second material and said cooling gradient is less than the product of said thermal expansion coefficient of said first material and said cooling gradient.

8. Assembly method according to claims 2 or 4 or 6, **characterized in that** the method includes a step consisting in depositing an intermediate layer (9) on the first part (1), and a final step consisting in dissolving said intermediate layer in order to increase the play (12) between the first and second part if the product of said thermal expansion coefficient of said second material and said cooling gradient is less than the product of said thermal expansion coefficient of said first material and said cooling gradient.

9. Assembly method according to claim 5, **characterized in that** the method includes a step consisting in making at least one portion in relief (13) on the second part in order to increase the mechanical adhesion between the first (1) and the second part (2).

10. Assembly method according to claim 6, **characterized in that** the method includes a step consisting in making at least one portion in relief on the first part in order to increase the mechanical adhesion between the first and second part.

11. Assembly method according to claims 9 or 10, **characterized in that** said at least one portion in relief is achieved by machining.

12. Assembly method according to any of the preceding claims, **characterized in that** said first material or second material chosen as being a metal alloy capable of becoming at least partially amorphous undergoes a treatment allowing said material to become totally amorphous.

13. Assembly method according to any of the preceding claims, **characterized in that** said first material or second material chosen as being a metal alloy capable of becoming at least partially amorphous undergoes a thermal treatment allowing said material to become at least partially crystalline after the assembly step.
